# EUROPÄISCHE PATENTSCHRIFT

(11) **EP 2 359 506 B1**
(45) Veröffentlichungstag und Bekanntmachung des Hinweises auf die Patenterteilung: **15.05.2013**
(21) Anmeldenummer: 09778734.5
(22) Anmeldetag: 25.09.2009
(51) Int. Cl.: H04B 17/00

(54) **VERFAHREN UND VORRICHTUNG ZUM TESTEN EINES MOBILFUNKGERÄTS MITTELS STATISCHER KANALSIMULATION IM FREQUENZRAUM**
METHOD AND DEVICE FOR TESTING A MOBILE RADIO DEVICE BY MEANS OF STATIC CHANNEL SIMULATION
PROCÉDÉ ET DISPOSITIF D'ESSAI D'UN APPAREIL RADIO MOBILE À L'AIDE D'UNE SIMULATION STATIQUE DE CANAL

(30) Priorität: 04.11.2008 DE 102008055759
(43) Veröffentlichungstag der Anmeldung: 24.08.2011
(73) Patentinhaber: Rohde & Schwarz GmbH & Co. KG, 81671 München (DE)
(72) Erfinder: HARTENECK, Moritz, 81739 München (DE)
(74) Vertreter: Beder, Jens
(86) Internationale Anmeldenummer: PCT/EP2009/006949
(87) Internationale Veröffentlichungsnummer: WO 2010/051881

(56) Entgegenhaltungen:
- US-A1- 2007 153 731
- ESLAMI H ET AL: "A Scalable Wireless Channel Emulator for Broadband MIMO Systems" COMMUNICATIONS, 2007. ICC '07. IEEE INTERNATIONAL CONFERENCE ON, IEEE, PI, 1. Juni 2007 (2007-06-01), Seiten 2592-2597, XP031126062 ISBN: 978-1-4244-0353-0
- PICOL S ET AL: "Further Steps Towards the Development of a Hardware Simulator for MIMO Radio Channels" PERSONAL, INDOOR AND MOBILE RADIO COMMUNICATIONS, 2005. PIMRC 2005. IE EE 16TH INTERNATIONAL SYMPOSIUM ON, IEEE, PI, 1. Januar 2005 (2005-01-01), Seiten 557-561, XP031099806
- ROHDE & SCHWARZ: "R&S SMU200A Vector Signal Generator - Data sheet" 31. Dezember 2007 (2007-12-31), XP002561125 Gefunden im Internet: URL:http://www2.rohde-schwarz.com/file_810 4/SMU_dat-sw-en.pdf> [gefunden am 2009-12-14]
- WEIJUN ZHU ET AL: "An Open Access Wideband Multi-Antenna Wireless Testbed with Remote Control Capability" TESTBEDS AND RESEARCH INFRASTRUCTURES FOR THE DEVELOPMENT OF NETWORKS AND COMMUNITIES, 2005. TRIDENTCOM 2004. FIRST INTERNATIONAL CONFERENCE ON TRENTO, ITALY 23-25 FEB. 2005, PISCATAWAY, NJ, USA,IEEE, 23. Februar 2005 (2005-02-23), Seiten 72-81, XP010774259 ISBN: 978-0-7695-2219-7
- Moritz Harteneck: "LTE: Testing the physical layer of next-generation mobile communications" 1. Oktober 2008 (2008-10-01), XP002562589 Gefunden im Internet: URL:www.edn-europe.com/print.asp?id=2447> [gefunden am 2010-01-11]

## Beschreibung

Die vorliegende Erfindung bezieht sich auf eine Vorrichtung und ein Verfahren zum Testen von Mobilfunkgeräten in einem Mehrantennensystem, das eine zeitlich invariante, aber frequenzselektive Kanalsimulation verwendet.

Um den steigenden Bedarf an Übertragungsgeschwindigkeit für Daten- oder Multimediadienst im Mobilfunk abdecken zu können, kommen Funkübertragungsmethoden mit hoher spektraler Effizienz und unter Ausnutzung der räumlichen Dimension zur Informationsübertragung zum Einsatz. So wird zum Beispiel in dem Mobilfunkstandard Long Term Evolution (LTE) der 3GPP Standardisierung das OFDM (Orthogonal Frequency Division Multiplexing) Modulationsverfahren verwendet. Dabei wird Nutzinformation mit hoher Datenrate auf mehrere Teildatenströme mit niedrigerer Datenrate aufgeteilt. Diese Teildatenströme werden jeder für sich mit einem Modulationsverfahren wie z.B. der Quadraturamplitudenmodulation (QAM) mit geringer Bandbreite moduliert und auf eine Trägerfrequenz aufgebracht. Diese werden im Weiteren als modulierte Trägersignale bezeichnet. Die modulierten Trägersignale der einzelnen Teildatenströme werden nun zu einem Sendesignal addiert, wobei die modulierten Trägersignale wegen der Orthogonalität der Trägerfunktion orthogonal zueinander stehen.

Für die Übertragung wird zusätzlich ein Mehrantennensystem (MIMO = multiple input multiple output) verwendet, bei dem das Signal von z.B. zwei oder vier Antennen in der Basisstation an z.B. zwei oder vier Antennen im Mobilfunkgerät gesendet wird. Dabei kann auch verschiedene Nutzinformation bzw. Datenteilströme auf Übertragungskanälen mit der gleichen Frequenz aber über verschiedene Antennen übertragen werden. Um den Datenstrom zu decodieren und wieder zusammenzusetzen, müssen die einzelnen Kanäle unterscheidbar sein, was durch die Zuweisung unterschiedlicher Ausbreitungscharakteristika an den jeweiligen Antennen erreicht wird. Durch die unterschiedlichen Ausbreitungswege zwischen den verschiedenen Basisstations- und Funkgeräteantennen wird zusätzlich eine Auslöschung des Signals durch Reflexionen etc. vermindert. Dies ermöglicht eine höhere Datenrate bei gleichzeitig besserer Übertragungsqualität.

Um die Funktionen eines Mobilfunkgeräts in einem Mehrantennensystem mit OFDM Modulation unter definierten, gut reproduzierbaren Bedingungen zu testen, wird eine Testvorrichtung verwendet. Dabei werden üblicherweise die äußeren Einflüsse auf die Übertragungskanäle durch einen Kanalsimulator nachgebildet, der das von dem Tester zu dem Mobilfunkgerät gesendete Signal im Zeitraum also auf der Übertragungsstrecke beeinflusst.

In DE 11 2006 000 207 T5 wird ein Verfahren und eine Vorrichtung zur Durchführung einer Kanalsimulation beschrieben, das auch für ein Mehrantennensystem geeignet ist. Dabei wird eine Funkverbindung zwischen dem Empfänger mit mindestens einer Störsignalquelle in Echtzeit simuliert und die Simulationsergebnisse werden in einem Speicher gespeichert. Falls der Speicher Ergebnisse von früher simulierten Signalquellen enthält, werden die Ergebnisse synchron kombiniert. Danach werden während der Simulation einer Funkverbindung zwischen dem Sender und dem Empfänger die gespeicherten Simulationsergebnisse in Echtzeit vom Speicher gelesen und die gelesenen Ergebnisse werden der Simulation hinzugefügt.

Um Algorithmen bzw. Funktionseinheiten die im Frequenzbereich definiert sind wie z.B. die Kanalschätzung in einem Mobilfunkgerät, in einem MIMO System testen zu können, ist die oben beschriebene Kanalsimulation wenig geeignet. Jede einzelne Verzerrung ist aus einer Vielzahl von Störfrequenzen zusammengesetzt und ändert sich insbesondere mit der Zeit. Eine eindeutige Zusammensetzung des Sendesignals bezüglich der Sendefrequenzen zu einer bestimmten Zeit sowie die Reaktion der zu testenden Funktionseinheit auf diese Sendefrequenzkonstellation sind damit nur sehr aufwändig zu ermitteln. Außerdem stellt die beschriebene Vorrichtung hohe Anforderungen an die Kapazität und Geschwindigkeit der verwendeten Speicher- und Softwarekomponente.

Die Druckschrift "A scalable wireless channel emulator for broadband MIMO systems" in: Communications, 2007, ICCC 2007, IEEE International Conference on, Pl, 1. Juni 2007, von Hamid Eslami et al, offenbart einen Funkkanalsimulator, ausgelegt für die Simulation eines Funkkanals für breitbandige Mehrantennensysteme. Die Kanalsimulation nach Hamid Eslami wird in geeigneter Weise vorgenommen, um einen reduzierten Speicher- und Rechenaufwand für die MIMO-Kanalsimulation verglichen mit herkömmlichen MIMO-Funkkanalsimulationen ausgehend von grundsätzlich bekannten SISO-Funkkanalsimulationen zu erzielen. Die eigentliche Funkkanalsimulation nach Hamid Eslami erfolgt im Basisband mittels frequenzselektiver Verzerrung des zu übertragenden Funksignals in Realzeit im Frequenzbereich. Die Simulation des Funkkanals erfolgt unter Berücksichtigung zeitvarianter Übertragungseffekte. Das simulierte Signal wird im Anschluss an die Kanalsimulation in die Sendefrequenzlage umgesetzt.

In der Internetveröffentlichung "LTE: Testing the physical layer of next generation of mobile communications", M. Harteneck, Oktober 2008, wird ein Testverfahren der physikalischen Schicht von LTE-Mobilfunksystemen beschrieben. Die verwendeten Kanalmodelle zeigen flache statische Kanäle auf Unterträgerebene und ermöglichen den Test von Kanalschätzung and Kanalqualitätsinformation in einem realistischen und wiederholbaren Umfeld

In der Internetveröffentlichung "Effectively testing MIMO enabled wireless devices", G. Celine, August 2007, S.40-44: URL:http://rfdesign.com/mag/708FRDF4.pdf, werden grundlegende Methoden zum Testen der Sende-/Empfangsschnittstelle von Geräten mit MIMO-Funktionalität vorgestellt. Für einen funktionalen Test wird ein Testverfahren mit einem statischen Kanaltester offenbart. Die zu prüfenden Merkmale und Funktionen sind unter anderem ein Test der Implementierung des Übertragungsprotokolls im Testobjekt. Geprüft werden weiter ausdrücklich Funktionen des Testobjekts wie Verbindungsaufbau unabhängig von Einflüssen der physikalischen Schicht 1 im OSI-Referenzmodell.

Es ist daher die Aufgabe dieser Erfindung, ein verbessertes Verfahren sowie eine verbesserte Vorrichtung zum Testen eines MIMO-Verhaltens eines Mobilfunkgeräts zu schaffen. Die Kanalsimulation soll des Weiteren einfach und kostengünstig ausführbar sein.

Die Aufgabe wird durch das erfindungsgemäße Verfahren gemäß Anspruch 1 und die erfindungsgemäße Vorrichtung gemäß Anspruch 5 gelöst.

Bei dem erfindungsgemäßen Verfahren werden zuerst die zu übertragenden Nutzdaten in Datenteilströme aufgeteilt, die einer Mehrzahl von Trägerfrequenzen und den jeweils zugehörenden Kodierungsparametern je Antenne zugewiesen werden. Danach werden die Nutzdaten auf die Trägerfrequenzen entsprechend der Zuweisung aufmoduliert. Diese werden im Weiteren modulierte Trägersignale genannt. Zur Simulation des Ausbreitungskanals werden nun eines oder mehrere modulierte Trägersignale entsprechend einem frequenzselektiven, statischen Kanalmodell im Frequenzraum verzerrt. Anschließend wird ein Sendesignal, das aus den kanalmodellierten modulierten Trägersignalen zusammengesetzt ist, im Zeitraum an ein zu testendes Mobilfunkgerät übertragen.

Die erfindungsgemäße Vorrichtung umfasst entsprechend eine Zuweisungseinheit zum Zuweisen der zu übertragenden Nutzdaten auf die Trägerfrequenzen sowie die zu verwendenden Kodierungsparameter für jede Antenne. Sie umfasst des Weiteren eine Signalgeneratoreinheit zum Erzeugen der entsprechenden modulierten Trägersignale je Antenne. Eine Kanalsimulatoreinheit verzerrt gezielt einzelne modulierte Trägersignale im Frequenzraum entsprechend einem frequenzspezifischen und zeitlich konstanten Kanalmodell. Durch die Kanalsimulationseinheit kann eine gezielte Verzerrung einzelner Trägerfrequenzen erzielt werden. Eine zeitliche Variation der Trägerfrequenzen, wie sie bei einer Kanalsimulation im Zeitraum mit zeitlich veränderlicher Verzerrung auf der Übertragungsstrecke vom Tester zum Mobilfunkgerät erfolgen würde, wird dadurch minimiert. Damit können in vorteilhafter Weise Algorithmen bzw. Gerätekomponenten, die im Frequenzbereich arbeiten, unkompliziert und schnell getestet werden. Vorzugsweise werden sämtliche Trägersignale verzerrt, wobei aber die Verzerrung der einzelnen Trägersignale unterschiedlich sein kann.

In den Unteransprüchen sind vorteilhafte Weiterbildungen des erfindungsgemäßen Verfahrens und der erfindungsgemäßen Vorrichtung dargestellt.

Vorteilhafter Weise wird eine Information über die empfangenen Trägerfrequenzen und die Kodierungsparameter jedes einzelnen Sendesignals von dem zu testenden Mobilfunkgerät ermittelt, an den Tester zurückgeschickt und im Tester mit den entsprechenden ursprünglichen Trägerfrequenzen und Kodierungsparametern der Zuweisung verglichen. Dies ist besonders einfach möglich, da das Kanalmodell frequenzspezifisch und im Frequenzraum wirkt und auch die Parameter des Sendesignals pro Trägerfrequenz ermittelt werden.

Ebenfalls von Vorteil ist es, den Kanalsimulator als integralen Bestandteil in den Tester zu integrieren. Dadurch werden äußere Einflüsse, wie Störsignale aus anderen Funkquellen minimiert. Der Tester kann kompakt aufgebaut sein und vorhandene Komponenten zur Kanalsimulation mit verwenden. Das ermöglicht eine kompakte und auch kostengünstige Bauweise des Testers.

Die Erfindung wird im Folgenden anhand eines Ausführungsbeispiels und mit Bezug auf die Zeichnung näher erläutert. Es zeigen:
- Fig.1: ein Blockschaltbild der erfindungsgemäßen Vorrichtung zum Testen eines Mobilfunkgeräts gemäß dem LTE Standard mit einem 2x2 MIMO Antennensystem;
- Fig.2: ein Ablaufdiagramm des erfindungsgemäßen Verfahrens;
- Fig.3: ein beispielhaftes Sendesignal einer Antenne vor und nach der Kanalsimulation.

Einander entsprechende Teile sind in allen Figuren mit den gleichen Bezugszeichen versehen.

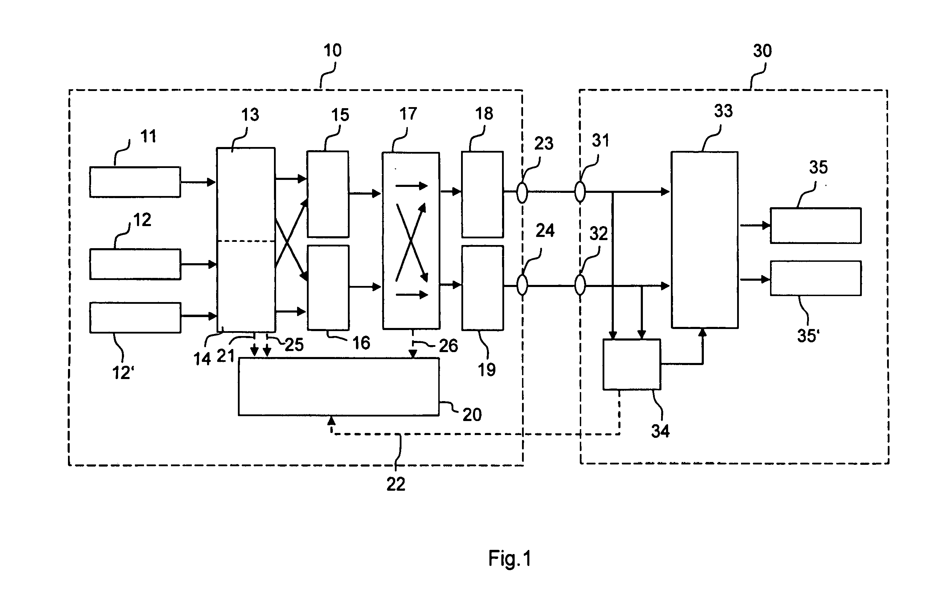

Ein Ausführungsbeispiel der erfindungsgemäßen Vorrichtung soll anhand des Blockschaltbildes in Fig.1 erläutert werden. Die dargestellte Vorrichtung dient zum Testen eines Mobilfunkgeräts, das beispielhaft gemäß dem LTE Standard arbeitet. Für die Funkübertragung von der Basisstation, die hier von einem Tester 10 simuliert wird, zum Mobilfunkgerät 30 wird das OFDM (Orthogonal Frequency Division Multipex) Modulationsverfahren verwendet.

Die Sendesignale werden für die Übertragung über ein Mehrantennensystem (MIMO) mit zwei Ausgängen 23, 24 im Tester 10 und zwei Eingängen 31 und 32 im Mobilfunkgerät aufbereitet. Im gezeigten Ausführungsbeispiel ist jeweils ein Testerausgang 23 bzw. 24 mit einem Mobilfunkgeräteeingang 31 bzw. 32 über Kabel miteinander verbunden. Stattdessen könnte die Übertragung auch von jeweils einer Antenne pro Testerausgang 23, 24 an jeweils eine Antenne pro Mobilfunkgeräteeingang 31, 32 stattfinden. Die Vorrichtung ist nicht auf ein 2x2 MIMO System beschränkt und kann auch für ein Übertragungssystem mit mehr bzw. weniger Antennen angewendet werden.

Die zu übertragenden Nutzdaten 12, 12' werden der Zuweisungseinheit 14 zugeführt und dort den Sendeantennen 23, 24 zugewiesen und mit den entsprechenden Kodierungsparametern versehen. Die Kodierungsparameter umfassen beispielsweise Information über die zu verwendenden Trägerfrequenzen sowie Parameter zur Ausbreitungscharakteristik, die in einer sogenannten Precoding Matrix gegeben sind. Entsprechend der Übertragungsqualität des Funkkanals sind verschiedene Precoding Matrizen sowie Frequenzbereiche definiert. Die Auswahl der anzuwendenden Precoding Matrix und des Trägerfrequenzbereichs wird durch eine Anforderung vom Mobilfunkgerät 30 gesteuert.

Ähnlich den Nutzdaten werden den Signalisierungsdaten 11 in einer Zuweisungseinheit 13 die zu verwendenden Trägerfrequenzen sowie entsprechenden Kodierungsparametern je Sendeantenne zugewiesen.

Die Nutz- und Signalisierungsdaten werden nun entsprechend den Zuweisungsvorgaben aus Einheit 13, 14 jeweils einer Signalgeneratoreinheit 15, 16 je Antenne zugeführt und dort auf eine Mehrzahl von Trägerfrequenzen zur Erzeugung modulierter Trägersignale aufmoduliert. Diese modulierten Trägersignale pro Antenne werden nun an den Kanalsimulator 17 übergeben. Dieser modifiziert gemäß einem Kanalmodell zeitlich konstant die modulierten Trägersignale einzelner Trägerfrequenzen, z.B. nach einem im Voraus definierbaren Schema. Dies entspricht einem statischen Kanal mit diskreten Störungen der modulierten Trägersignale im Frequenzraum. Die aus der Kanalsimulation resultierenden modulierten Trägersignale werden mittels einer inversen Fouriertransformation 18, 19 zu einem Sendesignal pro Antenne aufsummiert und in den Zeitraum übergeführt. Die Auswahl der zu störenden Trägerfrequenzen ist im Kanalmodell vorzugsweise einstellbar.

Zusätzlich werden die Sendesignale der beiden Antennen so kombiniert, dass das resultierende Signal am Testerausgang 23 bzw. 24 dem überlagerten Empfangssignal der beiden Antenneneingänge am Mobilgeräteeingang 31 bzw. 32 entspricht. Dadurch können die Testerausgänge 23 bzw. 24 über ein Kabel mit den Mobilfunkgeräteeingängen 31, 32 verbunden werden. Eine Störung durch den Funkübertragungsweg zwischen Tester- und Mobilfunkantenne ist damit ausgeschlossen. Es ist sichergestellt, dass im Mobilfunkgerät 30 genau die vom Tester 10 erzeugten Sendesignale ankommen.

Im Mobilfunkgerät 30 werden die Empfangssignale der Mobilfunkgeräteeingänge 31 und 32 einem Kanalschätzer 34 zugeführt und dort in die einzelnen modulierten Trägersignale aufgespaltet. Dazu wird jeweils eine Fourier-Transformation auf die Empfangssignale der beiden Antennen angewandt. Der Kanalschätzer 34 ermittelt Information über die empfangenen Trägerfrequenzen und deren Kodierungsparameter und gibt sie an einen Equalizer 33 zur Rückgewinnung der Daten 35, 35' aus den an den Mobilfunkgeräteeingängen 31 und 32 eingegangenen Empfangssignalen weiter.

Die vom Kanalschätzer 34 ermittelte Information zu Trägerfrequenzen und Kodierungsparametern kann parallel dazu an die Auswerteeinheit 20 im Tester über eine Verbindung 22 übermittelt und dort mit den zur Erzeugung der modulierten Trägersignale verwendeten Werte 21 sowie dem Kanalmodell 26 aus dem Kanalsimulator verglichen werden.

Zusätzlich leitet der Kanalschätzer 34 aus der Qualität der einzelnen Trägerfrequenzen in den Empfangssignalen neue Werte für die in den nachfolgenden Sendesignalen zu verwendenden Trägerfrequenzen und Kodierungsparameter ab. Die Kodierungsparameter für die Antennencharakteristik werden z.B. über die Auswahl einer bestimmten Precoding Matrix aus einer vorgegebenen Menge, dem sogenannten Codebook, angegeben. Die Qualität der einzelnen Trägerfrequenzen oder -frequenzblöcke wird durch einen Kanalqualitätsindikator (Channel Quality Indicator) dargestellt. Diese beiden Parameter stellen nur Beispiele für die ermittelten Parameter dar und können durch weitere ergänzt werden. Diese Werte werden an die Zuweisungseinheit 14 des Testers 10 über eine Signalisierungsnachricht zurückgemeldet und dort für die nächsten zu übermittelnden Nutz- und Signalisierungsdaten 12, 13 verwendet. Es besteht die Möglichkeit eine Kopie 25 dieser Werte sowie Information zu den Trägerfrequenzen 21 aus der Zuweisungseinrichtung und Information zum Kanalmodell 26 aus der Kanalsimulationseinheit an die Auswertefunktion zu weiteren Auswertemaßnahmen weiterzuleiten.

Damit kann z.B. die Funktionsweise des Kanalschätzers auf einfache Weise getestet werden.

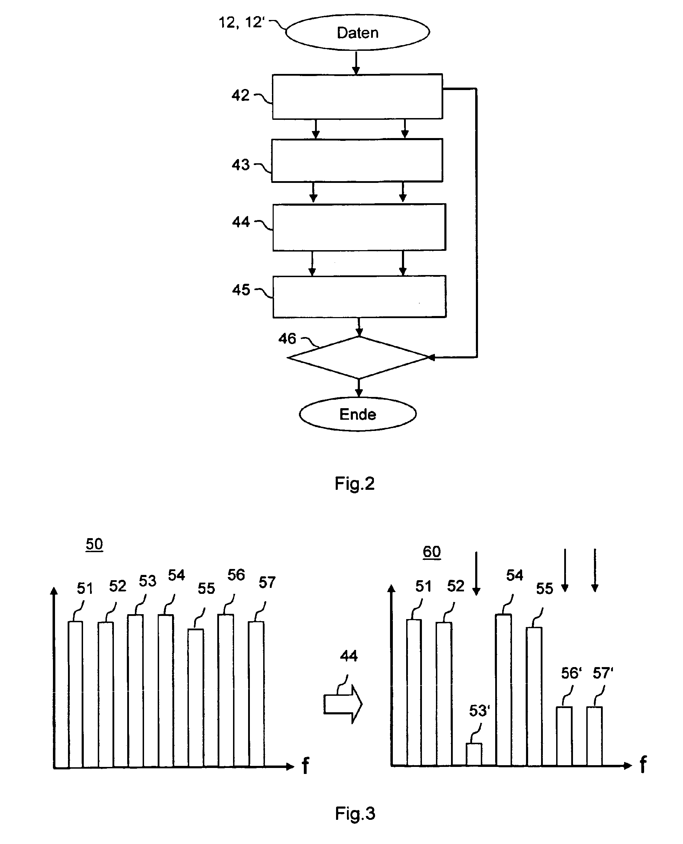

In Fig.2 sind die einzelnen Schritte des erfindungsgemäßen Verfahrens in einem Ablaufdiagramm dargestellt. Den Ausgangspunkt bilden die zu übermittelnden Daten 12, 12'. Diesen werden im Schritt 42 den Trägerfrequenzen sowie den Kodierungsparametern über die zwei Basisstationsantennen 23, 24 zugewiesen. Für jede Antenne werden im Schritt 43 die modulierten Trägersignale entsprechend den zugewiesenen Trägerfrequenzen und Kodierungsparametern erzeugt. Dabei sind im Folgenden die modulierten Trägersignale die einer Antenne zugewiesen sind, jeweils durch einen Pfeil gekennzeichnet. Die modulierten Trägersignale oder zumindest ein Teil hiervon werden nun im Schritt 44 durch ein zeitlich invariantes, frequenzselektives Kanalmodell im Frequenzraum verändert und über eine inverse Fourier-Transformation in ein zeitlich variables Sendesignal im Zeitraum überführt und an das Mobilfunkgerät 30 übertragen. Optional werden die gestörten Sendesignale der beiden Antennen so kombiniert, dass das resultierende Signal dem überlagerten Empfangssignal der beiden Antenneneingänge entspricht.

Durch die Kanalschätzung im Mobilfunkgerät 30 werden die Übertragungsfrequenzen sowie Qualität und Ausbreitungscharakteristik der einzelnen modulierten Trägersignale der beiden Antennensignal ermittelt. Die Werte aus der Kanalschätzung werden nun in Schritt 46 mit den Werten verglichen, die bei der Zuweisung zu den zu übertragenden Nutzdaten in Schritt 42 verwendet wurden.

Fig.3 zeigt schematisch die Veränderung der modulierten Trägersignale einer Antenne durch die frequenzselektive aber zeitlich statische Kanalsimulation im Frequenzraum. Im Diagramm 50 sind die einzelnen modulierten Trägersignale mit den Trägerfrequenzen 51, 52, .., 57 nach dem Verfahrensschritt 43, dem Erzeugen der modulierten Trägersignale entsprechend den Trägerfrequenz und Kodierungsparameterzuweisungen bzw. vor der Kanalsimulation 44, dargestellt. Das Diagramm 60 zeigt die Trägersignale nach der Kanalsimulation 44, hier durch den Pfeil angedeutet. Die modulierten Trägersignale mit den Trägerfrequenzen 53', 56' und 57' sind verändert worden. Dabei können sich die Änderungen auf die Trägersignalleistung, Ausbreitungscharakteristik oder auch Phasenlage beziehen.

Alle beschriebenen und/oder gezeichneten Merkmale können im Rahmen der Erfindung vorteilhaft miteinander kombiniert werden. Die Erfindung ist nicht auf die Ausführungsbeispiele beschränkt.

## Patentansprüche

1. Verfahren zum Testen eines Mobilfunkgeräts (30) mit einem Tester (10), wobei Nutzdaten (12, 12') zwischen Tester und Mobilfunkgerät (30) über ein Mehrantennensystem (23, 24, 31, 32) übertragen werden, bei dem ein Sendesignal zusammengesetzt aus einer Mehrzahl von modulierten Trägersignalen mit unterschiedlichen Trägerfrequenzen übertragen wird, mit folgenden Verfahrensschritten:
- Zuweisen der zu übertragenden Daten (11, 12, 12') zu einer Mehrzahl von Trägerfrequenzen und Kodierungsparametern je Sendeantenne (23, 24);
- Erzeugen einer Mehrzahl von modulierten Trägersignalen entsprechend den zugewiesenen Trägerfrequenzen und Kodierungsparametern;
- Verzerren eines oder mehrerer modulierter Trägersignale mittels eines frequenzselektiven, statischen Kanalmodells im Frequenzraum;
- Übertragen eines Sendesignals, das aus den kanalmodellierten modulierten Trägersignalen zusammengesetzt ist, an ein Mobilfunkgerät (30) im Zeitraum;
Ermitteln von Information zu Trägerfrequenzen und Kodierungsparametern des empfangenen Sendesignals im Mobilfunkgerät (30) und Übertragung der ermittelten Information an den Tester (10); **dadurch gekennzeichnet,**
**dass** im Tester (10) die Information über die im Mobilfunkgerät (30) empfangenen Trägerfrequenzen und die Kodierungsparameter der einzelnen modulierten Trägersignale (22, 25), die das Mobilfunkgerät (30) ermittelt, mit der ursprünglichen Zuweisungsinformation (21), die den zu übertragenden Daten bei der Zuweisung je Sendeantenne im Tester (10) zugewiesen wurde, sowie die Information zum verwendeten statischen Kanalmodell (26) ausgewertet wird; und
**dass** Zuweisen der zu übertragenden Daten (11, 12, 12') zu einer Mehrzahl von Trägerfrequenzen und Kodierungsparametern je Sendeantenne (23, 24) für die nächsten zu übermittelnden Daten aufgrund der im Tester (10) ausgewerteten Information über die im Mobilfunkgerät (30) empfangenen Trägerfrequenzen und Kodierungsparameter erfolgt.

2. Verfahren zum Testen eines Mobilfunkgerätes nach Anspruch 1
**dadurch gekennzeichnet,**
**dass** durch den Tester (10) für jeden
Mobilfunkgeräteeingang (31, 32) ein zu erwartendes Empfangssignal aus den Sendesignalen aller Sendeantennen berechnet wird.

3. Verfahren zum Testen eines Mobilfunkgerätes nach einem der Ansprüche 1 oder 2
**dadurch gekennzeichnet,**
**dass** eine Verzerrung eines oder mehrerer modulierter Trägersignale entsprechend einem Kanalmodell im Tester (10) und eine Ermittlung der Information über die empfangenen Trägerfrequenzen und die Kodierungsparameter der einzelnen modulierten Trägersignale im Mobilfunkgerät (30) erfolgen.

4. Vorrichtung zum Testen eines Mobilfunkgeräts in einem Mehrantennensystem, umfassend:
- eine Zuweisungseinheit (13, 14), die die zu übertragenden Daten (11, 12, 12') einer Mehrzahl von Trägerfrequenzen und Kodierungsparameter zuweist;
- eine Signalgeneratoreinheit (15, 16), die eine Mehrzahl von Trägersignalen entsprechend den zugewiesenen Übertragungsfrequenzen und Kodierungsparametern je Antenne erzeugt;
- eine Kanalsimulatoreinheit (17), die ein oder mehrere modulierte Trägersignale aus einer Mehrzahl von Trägersignalen entsprechend einem frequenzspezifischen, statischen Kanalmodell im Frequenzraum verzerrt;
- eine Ausgabeeinheit (18, 19), die ein Sendesignal, das aus den kanalmodulierten Trägersignalen zusammengesetzt ist, im Zeitraum an ein Mobilfunkgerät überträgt;
**dadurch gekennzeichnet,**
**dass** Information über die empfangenen Trägerfrequenzen und die Kodierungsparameter der einzelnen modulierten Trägersignale (22, 25) die das Mobilfunkgerät (30) ermittelt, mit der ursprünglichen Zuweisungsinformation (21), die den zu übertragenden Daten bei der Zuweisung zugewiesen wurde, sowie die Information zum verwendeten statischen Kanalmodell (26) ausgewertet wird; und
**dass** Zuweisen der zu übertragenden Daten (11, 12, 12') zu einer Mehrzahl von Trägerfrequenzen und Kodierungsparametern je Sendeantenne (23, 24) für die nächsten zu übermittelnden Daten aufgrund der im Tester (10) ausgewerteten Information über die im Mobilfunkgerät (30) empfangenen Trägerfrequenzen und Kodierungsparameter erfolgt.

5. Vorrichtung zum Testen eines Mobilfunkgeräts nach Anspruch 4
**dadurch gekennzeichnet,**
**dass** eine Auswerteeinheit (20) vorgesehen ist, die so eingerichtet ist, dass sie die Information über die empfangenen Trägerfrequenzen und die Kodierungsparameter der einzelnen modulierten Trägersignale (22, 25), die das Mobilfunkgerät (30) ermittelt, vom Mobilfunkgerät empfängt und mit der Zuweisungsinformation (21), die den zu übertragenden Daten bei der Zuweisung zugewiesen wurden, sowie Information zum verwendeten statischen Kanalmodell (26) auswertet.

6. Vorrichtung zum Testen eines Mobilfunkgeräts nach einem der Ansprüche 4 oder 5
**dadurch gekennzeichnet,**
**dass** der Kanalsimulator (17) als ein integraler Bestandteil in die Vorrichtung zum Testen eines Mobilfunkgeräts (10) integriert ist und im Frequenzraum arbeitet.

## Claims

1. Method of testing a mobile radio unit (30) with a tester (10), wherein useful data (12, 12') are transmitted between the tester and mobile radio unit (30) via a multiple antenna system (23, 24, 31, 32), in which a transmission signal made up of a plurality of modulated carrier signals is transmitted with different carrier frequencies, comprising the following steps:
- allocating the data (11, 12, 12') that are to be transmitted to a plurality of carrier frequencies and coding parameters for each transmitting antenna (23, 24);
- generating a plurality of modulated carrier signals corresponding to the allocated carrier frequencies and coding parameters;
- distorting one or more modulated carrier signals by means of a frequency-selective, static channel model in the frequency domain;
- transmitting a transmission signal which is made up of the channel-modelled modulated carrier signals, to a mobile radio unit (30) in the time domain;
determining information relating to carrier frequencies and coding parameters of the transmission signal received in the mobile radio unit (30) and transmitting the information determined to the tester (10);
**characterised in that**
in the tester (10) the information as to the carrier frequencies received in the mobile radio unit (30) and the coding parameters of the individual modulated carrier signals (22, 25) is determined by the mobile radio unit (30), with the original allocation information (21) that has been allocated to the data to be transmitted during the allocation of each transmitting antenna in the tester (10), and the information on the static channel model (26) used is evaluated; and
**in that** the data (11, 12, 12') to be transmitted is allocated to a plurality of carrier frequencies and coding parameters for each transmitting antenna (23, 24) for the next data to be sent out on the basis of the information evaluated in the tester (10) as to the carrier frequencies and coding parameters received in the mobile radio unit (30).

2. Method of testing a mobile radio unit according to claim 1, **characterised in that** for each mobile radio unit input (31, 32) a reception signal to be expected is calculated by the tester (10) from the transmission signals of all the transmitting antennas.

3. Method of testing a mobile radio unit according to one of claims 1 or 2, **characterised in that** distortion of one or more modulated carrier signals corresponding to a channel model takes place in the tester (10) and determination of the information as to the carrier frequencies received and the coding parameters of the individual modulated carrier signals takes place in the mobile radio device (30).

4. Apparatus for testing a mobile radio device in a multiple antenna system, comprising:
- an allocation unit (13, 14) by which the data (11, 12, 12') to be transmitted is allocated to a plurality of carrier frequencies and coding parameters ;
- a signal generator unit (15, 16) which generates a plurality of carrier signals corresponding to the allocated transmission frequencies and coding parameters for each antenna;
- a channel simulator unit (17) which distorts one or more modulated carrier signals from a plurality of carrier signals corresponding to a frequency-specific, static channel model in the frequency domain;
- an output unit (18, 19) which transmits a transmission signal made up of the channel-modulated carrier signals to a mobile radio unit in the time domain; **characterised in that**
information as to the carrier frequencies received and the coding parameters of the individual modulated carrier signals (22, 25) determined by the mobile radio unit (30), with the original allocation information (21) that has been allocated to the data to be transmitted during the allocation, and the information on the static channel model (26) used is evaluated; and
**in that** allocation of the data (11, 12, 12') to be transmitted to a plurality of carrier frequencies and coding parameters for each transmitting antenna (23, 24) for the next data to be sent is carried out on the basis of the information evaluated in the tester (10) as to the carrier frequencies and coding parameters received in the mobile radio unit (30).

5. Apparatus for testing a mobile radio unit according to claim 4, **characterised in that**
an evaluating unit (20) is provided which is arranged such that it receives, from the mobile radio unit (30), the information as to the carrier frequencies received and the coding parameters of the individual modulated carrier signals (22, 25) which is ascertained by the mobile radio unit and evaluates it with the allocation information (21) which has been allocated to the data to be transmitted during the allocation, as well as information relating to the static channel model (26) used.

6. Apparatus for testing a mobile radio unit according to one of claims 4 or 5, **characterised in that** the channel simulator (17) is integrated as an integral component in the device for testing a mobile radio unit (10) and operates in the frequency domain.

## Revendications

1. Procédé pour tester un appareil de radiotéléphonie mobile (30) avec un testeur (10), dans lequel des données utiles (12, 12') sont transmises entre le testeur et l'appareil de radiotéléphonie mobile (30) par l'intermédiaire d'un système à plusieurs antennes (23, 24, 31, 32), dans le cadre duquel procédé un signal d'émission composé d'une pluralité de signaux porteurs modulés présentant diverses fréquences porteuses est transmis, comprenant les étapes de procédé suivantes consistant à **:**
- affecter les données (11, 12, 12') devant être transmises à une pluralité de fréquences porteuses et à des paramètres de codage par antenne d'émission (23, 24) ;
- produire une pluralité de signaux porteurs modulés correspondant aux fréquences porteuses et aux paramètres de codage affectés ;
- distordre un ou plusieurs signaux porteurs modulés au moyen d'un modèle statique de canal sélectif en matière de fréquence dans l'espace fréquentiel ;
- transmettre un signal d'émission composé de signaux porteurs modulés modélisés en fonction d'un canal à un appareil de radiotéléphonie mobile (30) dans la période de temps ;
- déterminer l'information relative aux fréquences porteuses et aux paramètres de codage du signal d'émission reçu dans l'appareil de radiotéléphonie mobile (30) et transmettre l'information déterminée au testeur (10), **caractérisé en ce**
**qu'**est évaluée dans le testeur (10) l'information concernant les fréquences porteuses reçues dans l'appareil de radiotéléphonie mobile (30) et les paramètres de codage des divers signaux porteurs (22, 25) modulés, que l'appareil de radiotéléphonie mobile (30) détermine, avec l'information d'affectation d'origine (21), qui a été affectée aux données devant être transmises lors de l'affectation par antenne d'émission dans le testeur (10), ainsi que l'information relative au modèle statique de canal (26) utilisé ; et
en ce que l'affectation des données (11, 12, 12') devant être transmises à une pluralité de fréquences porteuses et aux paramètres de codage par antenne d'émission (23, 24) est effectuée pour les prochaines données devant être transmises sur la base de l'information évaluée dans le testeur (10) concernant les fréquences porteuses et les paramètres de codage reçus dans l'appareil de radiotéléphonie mobile (30).

2. Procédé pour tester un appareil de radiotéléphonie mobile selon la revendication 1,
**caractérisé en ce**
**qu'**un signal de réception devant être attendu est calculé à partir des signaux d'émission de toutes les antennes d'émission par le testeur (10) pour chaque entrée d'appareil de radiotéléphonie mobile (31, 32).

3. Procédé pour tester un appareil de radiotéléphonie mobile selon l'une quelconque des revendications 1 ou 2,
**caractérisé en ce**
**qu'**une distorsion d'un ou de plusieurs signaux porteurs modulés correspondant à un modèle de canal a lieu dans le testeur (10), et en ce qu'une détermination de l'information au sujet des fréquences porteuses reçues et des paramètres de codage des divers signaux porteurs modulés a lieu dans l'appareil de radiotéléphonie mobile (30).

4. Dispositif pour tester un appareil de radiotéléphonie mobile dans un système à plusieurs antennes, comprenant **:**
- une unité d'affectation (13, 14), qui affecte les données (11, 12, 12') devant être transmises à une pluralité de fréquences porteuses et de paramètres de codage ;
- une unité de génération de signaux (15, 16), qui génère une pluralité de signaux porteurs correspondant aux fréquences de transmission affectées et aux paramètres de codage par antenne ;
- une unité de simulation de canal (17), qui distord un ou plusieurs signaux porteurs modulés à partir d'une pluralité de signaux porteurs correspondant à un modèle statique de canal spécifique en matière de fréquence dans l'espace fréquentiel ;
- une unité de distribution (18, 19), qui transmet un signal d'émission composé de signaux porteurs à modulation de canal à un appareil de radiotéléphonie mobile durant la période de temps ;
**caractérisé en ce**
**qu'**est évaluée l'information concernant les fréquences porteuses reçues et les paramètres de codage des signaux porteurs (22, 25) modulés individuels, que l'appareil de radiotéléphonie mobile (30) détermine, avec l'information d'affectation d'origine (21), qui a été affectée aux données devant être transmises lors de l'affectation, ainsi que l'information relative au modèle statique de canal (26) utilisé ; et
en ce que l'affectation des données (11, 12, 12') devant être transmises à une pluralité de fréquences porteuses et de paramètres de codage par antenne d'émission (23, 24) est effectuée pour les prochaines données devant être transmises sur la base de l'information évaluée dans le testeur (10) relative aux fréquences porteuses reçues dans l'appareil de radiotéléphonie mobile (30) et relative aux paramètres de codage.

5. Dispositif pour tester un appareil de radiotéléphonie mobile selon la revendication 4,
**caractérisé en ce**
**qu'**une unité d'évaluation (20) est prévue, laquelle est aménagée de telle manière qu'elle reçoit de l'appareil de radiotéléphonie mobile l'information concernant les fréquences porteuses reçues et les paramètres de codage des signaux porteurs (22, 25) modulés individuels que l'appareil de radiotéléphonie mobile (30) détermine et qu'elle évalue à l'aide de l'information d'affectation (21), qui a été affectée aux données devant être transmises lors de l'affectation, l'information relative au canal statique de modèle (26) utilisé.

6. Dispositif pour tester un appareil de radiotéléphonie mobile selon l'une quelconque des revendications 4 ou 5,
**caractérisé en ce**
**que** le simulateur de canal (17) est intégré en tant que partie intégrale dans le dispositif servant à tester un appareil de radiotéléphonie mobile (10) et fonctionne dans l'espace fréquentiel.
